# EUROPÄISCHE PATENTSCHRIFT

(11) **EP 3 902 775 B1**
(45) Veröffentlichungstag und Bekanntmachung des Hinweises auf die Patenterteilung: **08.02.2023**
(21) Anmeldenummer: 19829552.9
(22) Anmeldetag: 19.12.2019
(51) Int. Cl.: C03B 23/00, C03B 35/04, C03B 35/00

(54) **VORRICHTUNG ZUM HALTEN EINES GLAS-VORFORMLINGS**
DEVICE FOR HOLDING A GLASS PREFORM
DISPOSITIF DE RETENUE D'UNE PRÉFORME EN VERRE

(30) Priorität: 28.12.2018 DE 102018133667; 02.07.2019 DE 102019117756
(43) Veröffentlichungstag der Anmeldung: 03.11.2021
(73) Patentinhaber: FÜLLER GLASTECHNOLOGIE VERTRIEBS-GMBH, 94518 Spiegelau (DE)
(72) Erfinder: ALTENDORFER, Bernhard, 94065 Waldkirchen (DE)
(74) Vertreter: Pfrang, Tilman
(86) Internationale Anmeldenummer: PCT/EP2019/086313
(87) Internationale Veröffentlichungsnummer: WO 2020/136078

(56) Entgegenhaltungen:
- FR-A- 511 865
- FR-A- 511 865
- JP-A- H03 237 033
- JP-A- H03 237 033

## Beschreibung

Die Erfindung betrifft eine Vorrichtung zum Halten, insbesondere unterstützenden Halten sowie gegebenenfalls Bewegen, insbesondere Verfahren, eines Glasgegenstands gemäß dem Oberbegriff von Patentanspruch 1.

Derartige Vorrichtungen werden üblicherweise verwendet, um Glas-Vorformlinge, wie beispielsweise Gobs, zu handhaben, um diese beispielsweise von einem Ort zu einem anderen Ort zu bewegen und/oder gegebenenfalls in einem Ofen zu erwärmen. Für Letzteres werden vorgenannte Vorrichtungen beispielsweise verwendet, um einen Glas-Vorformling, in der Regel von unten, in einen Ofen zu verbringen, dort zumindest oberflächlich zu erweichen oder anzuschmelzen und anschließend einem Pressen oder Blankpressen zuzuführen.

So sind derartige Vorrichtungen beispielsweise aus den Veröffentlichungen DE 101 16 139 B4, DE 101 00 515 B4 oder DE 101 65 031 B4 bekannt, die zum unterstützenden Halten eines Gobs eine zumindest weitgehend geschlossene ringförmige Stützfläche oder zwei annähernd halbringförmige Stützflächen verwenden, auf welcher/welchen der Gob aufliegt.

FR 511 865 A offenbart eine Leiste, respektive einen Stab, zum Tragen von Glasscheiben offenbart, wobei die Leiste, respektive der Stab, zumindest eine kleine obere Kontaktfläche aufweist, auf welcher/welchem die Glasscheibe aufliegt. Aufgrund der kleinen Kontaktfläche zwischen Stab und Glasscheibe soll eine Wärmeableitung vom Glas auf den Stab vernachlässigbar sein, wodurch "lokale Kontraktionen" am Glas und damit eine etwaige Bruchgefahr des Glases vermieden werden sollen.

Ein wesentlicher Nachteil der aus diesen Veröffentlichungen bekannten Vorrichtungen zum unterstützenden Halten eines Gobs besteht darin, dass die Auflage dieser Vorrichtungen, auf welchen der Gob aufliegt, aufgrund deren ringförmiger bzw. halbringförmiger Geometrie, eine sehr großflächige Unterstützung des Gobs bedingt, was zur Folge hat, dass ein sehr großer Bereich des Gobs, nämlich der gesamte Kontaktbereich des Gobs mit der jeweiligen Auflagefläche, während einer thermischen Behandlung des Gobs abgeschirmt, respektive abgeschattet ist, was dazu führt, dass eine homogene Temperierung des Gobs, nämlich insbesondere eine homogene Erwärmung oder Abkühlung der gesamten Oberfläche des Gobs praktisch nicht möglich ist und im Bereich der Auflagefläche des Gobs zwangsläufig unerwünschte Temperaturgradienten entstehen. Letzteres wirkt sich bei den vorgenannten Vorrichtungen umso problematischer aus, als die notwendigen Temperaturen zum Erweichen oder oberflächlichen Anschmelzen des Glas-Vorformlings im Bereich von etlichen hundert Grad Celsius, beispielsweise im Bereich von 700°C und höher liegen, was in aller Regel einen Einsatz einer hochtemperaturstabilen metallischen Auflagefläche erfordert, die jedoch ihrerseits aufgrund ihres Metallcharakters wiederum eine hohe Wärmeleitfähigkeit aufweist, was wiederum die Entstehung eines Temperaturgradienten im Bereich der Auflagefläche des Gobs begünstigt.

Ein weiterer Nachteil der vorgenannten Vorrichtungen zum unterstützenden Halten eines Gobs besteht des Weiteren unter anderem auch in der ringförmigen bzw. halbringförmigen Geometrie dieser Vorrichtungen, da diese Geometrie eine sehr exakte Fertigung sowie den Einsatz sehr temperaturstabiler Materialien, respektive von Metallen, erfordert, um im Zuge einer thermischen Behandlung Verwerfungen der Auflagefläche der jeweiligen Vorrichtung zu vermeiden, die sich aufgrund einer dann uneinheitlichen und ungleichmäßigen Auflagefläche und damit Flächenbelastung des Glas-Vorformlings äußerst nachteilig auf dessen thermische Behandlung auswirken würden. Diesem Problem wird gemäß dem Stand der Technik dadurch begegnet, dass die Haltevorrichtung als Rohrsystem ausgebildet ist, das von einem Kühlmedium, wie beispielsweise von Luft, durchströmt wird. Dies bedeutet jedoch, dass eine Herstellung solcher aus dem Stand der Technik bekannten Vorrichtungen zum unterstützenden Halten eines Glas-Vorformlings nicht nur sehr aufwendig, sondern, damit einhergehend, auch teuer ist.

Ein weiterer Nachteil derartiger bekannter Vorrichtungen besteht ferner in der vorgegebenen ringförmigen bzw. halbringförmigen Geometrie von deren Auflagefläche, die nur für einen bestimmten Typ und eine bestimmte Größe eines Glas-Vorformlings konzipiert und prinzipbedingt praktisch nicht an etwaige andere Formen und/oder Größen von Glas-Vorformlingen anpassbar ist.

Der Erfindung liegt die Aufgabe zugrunde eine Vorrichtung zum unterstützenden Halten eines Glas-Vorformlings, wie beispielsweise eines Gobs, zur Verfügung zu stellen, welche die vorgenannten Nachteile von derartigen aus dem Stand der Technik bekannten Vorrichtungen vermeidet, gleichzeitig eine einfachere und kostengünstigere Herstellung ermöglicht und darüber hinaus universell einsetzbar ist.

Diese Aufgabe wird durch eine Vorrichtung gemäß Patentanspruch 1 gelöst.

Insbesondere wird diese Aufgabe durch eine Vorrichtung zum unterstützenden Halten sowie gegebenenfalls Verfahren eines Glas-Vorformlings, wie beispielsweise eines Gobs, gelöst, bei welcher die Vorrichtung eine Tragvorrichtung mit zumindest einem, im Betrieb im Wesentlichen vertikal ausgerichteten, stabförmigen Stützelement aufweist, wobei das stabförmige Stützelement an seinem oberen Ende in zumindest einer punktförmigen nach oben gerichteten Tragfläche mündet.

Darüber hinaus kann die erfindungsgemäße Vorrichtung alternativ oder zusätzlich zu zumindest einem stabförmigen Stützelement zumindest ein, im Betrieb im Wesentlichen vertikal ausgerichtetes und im Wesentlichen umgekehrt-U-förmiges Stützelement mit einer nach oben gerichteten und die sich im Wesentlichen vertikal erstreckenden Vertikalabschnitte des Stützelements verbindenden Tragfläche aufweisen.

Ein wesentlicher Punkt der Erfindung liegt hierbei darin, dass die erfindungsgemäße Vorrichtung zum unterstützenden Halten eines Glas-Vorformlings Stützelemente verwendet, die an ihren oberen Enden eine im Wesentlichen punktförmige und damit sehr kleine Tragfläche aufweisen, auf welchen der Glas-Vorformling aufliegt.

Ein wichtiger Punkt der Erfindung liegt somit darin, dass die erfindungsgemäße Vorrichtung den Glas-Vorformling möglichst kontaktarm unterstützt, d. h. eine Unterstützungsfläche für den Glas-Vorformling zur Verfügung stellt, die eine möglichst geringe Kontaktfläche mit dem Glas-Vorformling hat, so dass bei einer thermischen Behandlung des Glas-Vorformlings eine möglichst geringe Abschattung und keinesfalls eine großflächige Abschirmung von Oberflächen des Glas-Vorformlings gewährleistet ist, so dass die gesamte Oberfläche des Glas-Vorformling weitestgehend homogen und gleichmäßig erwärmt und abgekühlt werden kann.

Hierbei ist es wichtig zu verstehen, dass im Rahmen der Erfindung der Begriff "punktförmig" selbstverständlich nicht mathematisch zu verstehen ist, sondern erfindungsgemäß zum Ausdruck bringt, dass die an jedem Stützelement ausgebildete Tragfläche keinesfalls eine aus dem Stand der Technik bekannte großflächige Auflagefläche bildet, sondern möglichst klein gestaltet ist.

So haben die jeweiligen erfindungsgemäßen punktförmigen Tragflächen jeweils eine Fläche im Bereich von 1 mm² bis 100 mm², bevorzugt 12 mm² bis 60 mm² und besonders bevorzugt 20 mm² bis 40 mm². Durch die Einhaltung dieser Maße ist erfindungsgemäß gewährleistet, dass durch die erfindungsgemäß verwendeten Stützelemente, respektive die an deren jeweiligen oberen Enden angeordneten Tragflächen, im Zuge einer thermischen Behandlung die auf den Stützelementen aufliegenden Glas-Vorformlinge nur eine sehr geringe und im erfindungsgemäß besten Fall gar keine thermische Beeinflussung, respektive eine thermisch vernachlässigbare Beeinflussung, des Glas-Vorformlings stattfindet. Auf diese Weise kann die durch die Auflagefläche des Gobs abgeschattete Fläche gegenüber aus dem Stand der Technik bekannten Möglichkeiten um einen Faktor 3 bis 5 reduziert werden. Dies bedeutet, dass bei einem Gob, bei dem durch die sehr große Auflagefläche gemäß dem Stand der Technik bislang ein Drittel bis ein Viertel der Auflagefläche durch die ringförmige bzw. halbringförmige Geometrie bisheriger Unterstützungsvorrichtungen abgeschattet wurde, erfindungsgemäß deutlich weniger, d. h. nur noch etwa 10 % bis 30 % der beim Stand der Technik abgeschatteten Fläche des Gobs abgestattet wird.

Diese erfindungsgemäß sehr vorteilhafte Effekt ist im Wesentlichen darauf zurückzuführen, dass erfindungsgemäß nicht, wie beim Stand der Technik eine ring- oder halbringförmige Auflagefläche für den Glas-Vorformling verwendet wird, sondern eine im Wesentlichen punktförmige Auflagefläche, wobei bei der Berechnung der jeweiligen Auflagefläche des Glas-Vorformlings, respektive der aufgrund der Auflage auf den Stützelementen abgeschatteten Fläche des Glas-Vorformlings, bereits berücksichtigt ist, dass der Glas-Vorformling in aller Regel nicht auf einem einzigen Stützelement, sondern auf wenigstens zwei oder mehr Stützelementen aufliegt, so dass ein jeweiliger Glas-Vorformling jedenfalls sicher und wackelfrei auf vorzugsweise drei Unterstützungspunkten ruht. Diese Unterstützungspunkte können hierbei in Form von drei punktförmig nach oben gerichteten Tragflächen vorliegen oder aus einer Kombination eines umgekehrt-U-förmigen Stützelements mit einem weiteren solchen umgekehrt-U-förmigen Stützelement mit jeweils sehr schmalen linienförmigen Auflageflächen oder einem oder mehreren stabförmigen Stützelementen mit jeweils punktförmiger Auflagefläche bestehen. Eine jeweilige Kombination von Stützelementen, d. h. ob stabförmig oder umgekehrt-U-förmig, richtet sich hierbei nach den jeweiligen Erfordernissen; selbiges gilt auch für die Anzahl der jeweils einzusetzenden Stützelemente, wobei sich sowohl die Art als auch die Anzahl der jeweiligen Stützelemente im Wesentlichen an der Geometrie und/oder Größe eines jeweiligen Glas-Vorformlings orientiert.

Somit ist es anhand der erfindungsgemäßen Vorrichtung möglich zum einen die Auflagefläche eines jeweiligen Glas-Vorformlings auf jeweiligen Unterstützungselementen gegenüber dem Stand der Technik deutlich zu reduzieren, was gleichzeitig in erfindungsgemäß äußerst vorteilhafterweise auch dazu beiträgt, dass die durch die Unterstützungselemente im Zuge einer Wärmebehandlung des Glas-Vorformlings an dem Glas-Vorformling erzeugte Abschattungsfläche deutlich reduziert wird, nämlich auf vorgenanntes Maß. Diese geringere Abschattung eines jeweiligen zu erwärmenden Glas-Vorformlings geht mit wesentlichen Vorteilen bei der Erwärmung des Gobs in einem Ofen einher, was sich wiederum maßgeblich in der Qualität des fertigen Glasgegenstands widerspiegelt.

Gemäß einer bevorzugten Ausführungsform weist das zumindest eine, insbesondere stabförmige Stützelement erfindungsgemäß an seinem oberen Ende zumindest zwei, insbesondere gabelförmig verlaufende, Fortsätze auf, die jeweils in einer punktförmigen nach oben gerichteten Tragfläche münden. Zu diesem Zweck hat das Stützelement der erfindungsgemäßen Vorrichtung einen zentralen Fuß, der das Stützelement trägt, von welchem sich, gegebenenfalls über einen stangenförmigen oder rohrförmigen Zwischenabschnitt, einzelne Fortsätze gabelförmig nach oben in Richtung der Tragflächen erstrecken. Die einzelnen Fortsätze können hierbei von einem einzelnen Verzweigungspunkt oder in unterschiedlichen Höhen und an unterschiedlichen Seiten des stangen- bzw. rohrförmigen Zwischenabschnitts von diesem Zwischenabschnitt abzweigen. Des Weiteren ist es erfindungsgemäß möglich, dass sich einzelne Fortsätze nochmals ein- oder mehrmalig verzweigen, wobei jeder dieser einzelnen Fortsätze jeweils in einer im Wesentlichen punktförmigen Tragfläche endet.

Des Weiteren kann das zumindest eine Stützelement im Wesentlichen Y-förmig oder mit einem umgekehrten, d.h nach oben weisenden, zumindest Dreibein, ausgebildet sein, wobei, insbesondere jeder der Fortsätze, jeweils in einer punktförmigen, nach oben gerichteten Tragfläche mündet. Anstelle einer im Wesentlichen Y-förmigen Ausbildung der Stützelemente können diese auch im Wesentlichen T-förmig ausgebildet sein, wobei der Querträger des T in diesem Fall so konkav gewölbt ist, dass die jeweiligen Enden des Querträgers sich bezüglich des Fußes des T nach oben und von dem Fuß wegerstrecken und jeweils für sich wiederum eine Tragfläche bilden. Auf diese Weise wird eine linienförmig Auflage eines Gobs auf dem Querträger, wie sie aus dem Stand der Technik bekannt ist, sicher vermieden, wodurch eine unerwünschte Abschattung wie beim Stand der Technik erfindungsgemäß in vorteilhafter Weise unterbleibt.

Gemäß einer weiteren Ausführungsform der Erfindung weist die Vorrichtung zumindest zwei Stützelemente gemäß vorstehenden Ausführungen auf, wobei die jeweiligen Tragflächen der zumindest zwei Stützelemente vorzugsweise in einer Ebene angeordnet oder anordenbar sind. Diesbezüglich sei darauf hingewiesen, dass die erfindungsgemäße Vorrichtung auch drei und mehr Stützelemente aufweisen kann, die entweder gemeinsam oder individuell montierbar und verstellbar, insbesondere höhenverstellbar, sein können. Sämtliche Stützelemente sind hierbei rohrförmig ausgebildet und/oder weisen jeweils Hohlräume, wie beispielsweise zumindet einen Kanalauf, durch welche(n) ein Kühlmedium strömen kann.

Des Weiteren sind die Stützelemente, respektive deren Fortsätze, wie vorerwähnt, so ausgebildet, dass sie vorzugsweise in einer Ebene angeordnet sind oder in einer solchen Ebene angeordnet werden können, so dass gewährleistet ist, dass ein Gob sicher und gleichmäßig unterstützt in dieser Ebene auf den jeweiligen punkt- und/oder linienförmigen Tragflächen der Stützelemente aufliegt. Diesbezüglich sei darauf hingewiesen, dass die Ebene in diesem Zusammenhang nicht zwingend planar ausgebildet sein muss, sondern auch eine gekrümmte Ebene darstellen kann, die einer unteren, nämlich auf den Tragflächen aufliegenden Fläche, respektive Form des Gobs, entspricht.

In diesem Zusammenhang sei ferner auch darauf hingewiesen, dass die erfindungsgemäße Vorrichtung nach Möglichkeit lediglich ein, zwei oder maximal drei Stützelemente aufweist, die in Kombination der Stützelemente ihrerseits eine an den jeweiligen zu haltenden Gob angepasste Anzahl von Tragflächen aufweisen, so dass der Gob sicher auf diesen Tragflächen aufliegt und zugleich möglichst gering abgeschattet ist.

Zu diesem Zweck sind die Tragflächen jeweils an den Ecken eines, insbesondere gleichseitigen, Dreiecks oder, im Fall von vier und mehr Stützelementen eines, insbesondere gleichseitigen, Polygons angeordnet. Auf diese Weise ist erfindungsgemäß gewährleistet, dass der Glas-Vorformling eine optimale Unterstützung erfährt und wackelfrei auf den Stützelementen, respektive Tragflächen aufliegt, und zum anderen rund um jede der im Wesentlichen punkt oder linienförmigen Tragflächen eine gleichmäßig thermisch beaufschlagbare Fläche des aufliegenden Glas-Vorformlings zur Verfügung steht, die im Zuge einer thermischen Behandlung erwärmt oder gekühlt werden kann. Aufgrund der Tatsache, dass die jeweiligen Auflageflächen der Stützelemente für den Glas-Vorformling einerseits sehr klein bemessen sind und andererseits rund um die Auflageflächen der Stützelemente eine homogene thermische Behandlung, wie beispielsweise eine Erwärmung, des Glas-Vorformlings stattfinden kann, ist der durch die tatsächliche Kontaktfläche des Glas-Vorformlings mit der Tragfläche des jeweiligen Stützelements abgeschirmte Bereich sehr gering und erfindungsgemäß praktisch vernachlässigbar.

In diesem Zusammenhang sei ferner erwähnt, dass die Stützelemente jeweils gemeinsam oder individuell höhenverstellbar sind. Hierzu können die Stützelemente entweder jeweils individuell oder gemeinsam an einem Grundkörper befestigt sein, der seinerseits vertikal und/oder horizontal bewegbar ist. Des Weiteren sei in diesem Zusammenhang auch darauf hingewiesen, dass einzelne Stützelemente erfindungsgemäß auch individuell ausgetauscht werden können. Dies ist insbesondere dann von Vorteil, wenn sich die Gob-Geometrie ändert, so dass ein jeweiliger Gob individuell und, beispielsweise mittels unterschiedlich langer Fortsätze, auf seine jeweilige Geometrie angepasst unterstützt werden kann. Selbiges gilt sowohl für den Einsatz stabförmiger Stützelemente als auch für den Einsatz umgekehrt-U-förmiger Stützelemente.

Gemäß einer alternativen Ausführungsform der Erfindung können die Stützelemente individuell, beispielsweise mit einem Servomotor, insbesondere Linearmotor, ansteuerbar sein, so dass jedes einzelne Stützelement höhenmäßig individuell ausgerichtet und eingestellt werden kann. Dies ist beispielsweise dann von besonderem Vorteil, wenn der zu behandelnde Glas-Vorformling eine unregelmäßige Geometrie aufweist, mit welcher eine gleichmäßige und, nach Wunsch, gerade Auflage auf identisch hoch eingestellten Stützelementen nicht möglich wäre.

In diesem Zusammenhang sei auch darauf hingewiesen, dass eine weitere Möglichkeit zur Zurverfügungstellung unterschiedlich hoher Stützelemente, die beispielsweise auf einer gemeinsamen Grundplatte angeordnet sind, auch dadurch möglich ist, dass die jeweiligen Stützelemente nach Wunsch mit unterschiedlich langen Tragflächenstiften versehen werden können. Selbiges gilt erfindungsgemäß auch für individuell höhenverstellbare Stützelemente.

Für den Fall, dass die Stützelemente an einem gemeinsamen Grundkörper angeordnet sind, können die Stützelemente gemäß einer Ausführungsform der Erfindung mittels eines Schnellwechselverschlusses an dem Grundkörper lösbar befestigbar sein. Auf diese Weise ist ein einfacher und schneller Austausch von einzelnen oder von allen Stützelementen möglich.

Ein weiterer wesentlicher Vorteil der erfindungsgemäßen Vorrichtung besteht ferner darin, dass durch die sehr geringe Kontaktfläche des Glas-Vorformlings mit der Tragfläche eines jeweiligen Stützelements eine Wärmeableitung, nämlich im Falle einer Erwärmung des Glas-Vorformlings, nur minimal bzw. nicht vorhanden ist. Selbiges gilt analog auch dann, wenn dem Glas-Vorformling Wärme nicht zugeführt, sondern entzogen werden soll.

Die Tragflächen der erfindungsgemäßen Vorrichtung haben in Aufsicht vorzugsweise einen symmetrischen Querschnitt und sind bevorzugt im Wesentlichen rund oder ringförmig, wobei der Querschnitt der Tragflächen nach Wunsch und/oder Anforderung auch oval oder eckig, insbesondere rechteckig, oder von komplexer Geometrie sein kann. Auf diese Weise kann erfindungsgemäß ein Querschnitt der Tragflächen gewählt werden, der unter Berücksichtigung der Geometrie des Glas-Vorformlings eine optimale thermische Behandlung des Glas-Vorformlings ermöglicht und eine möglichst homogene Behandlung des Glas-Vorformlings gewährleistet. Im Falle eines umgekehrt-U-förmigen Stützelements ist der Querschnitt der jeweiligen Tragflächen in Aufsicht geradlinig linienförmig ausgebildet.

Gemäß einer vorteilhaften Ausführungsform der Erfindung sind die Tragflächen der erfindungsgemäßen Vorrichtung im Wesentlichen flach ausgebildet oder zumindest abschnittsweise, insbesondere nach oben weisend, konvex gewölbt. Dies gilt erfindungsgemäß sowohl für punktförmige als auch für linienförmige Tragflächen. Durch eine derartige Ausbildung der Tragflächen der Stützelemente wird einerseits eine gleichmäßige Auflage des Glas-Vorformlings auf der jeweiligen Tragfläche gewährleistet, wobei im Falle einer flachen Ausbildung der Tragfläche eine sehr gleichförmige Unterstützung des Glas-Vorformlings über die gesamte Kontaktfläche des Glas-Vorformlings mit der Tragfläche ermöglicht ist, was beispielsweise dann wesentlich ist, wenn ein Abdruck der Tragfläche auf dem erwärmten Glas-Vorformling vermieden werden soll, während eine konvex gewölbte Tragfläche verwendet werden kann, wenn die tatsächliche Kontaktfläche des Glas-Vorformlings mit der Tragfläche auf ein Minimum reduziert werden soll. In letzterem Fall kann die Tragfläche erfindungsgemäß auch nadelförmig spitz und/oder beispielsweise pyramidenförmig ausgebildet sein.

Erfindungsgemäß sind die Tragflächen der Stützelemente der erfindungsgemäßen Vorrichtung aus einem hochtemperaturbeständigen Material, wie beispielsweise einem hochschmelzenden Metall, beispielsweise Stahl, Gold, Kupfer, Ruthenium, Osmium, Zirconium, Hafnium, Niob, Tantal, Chrom, Molybdän oder Wolfram oder einer hochschmelzenden Legierung oder einer bei Temperaturen im Bereich von 700°C bis 1500°C, insbesondere im Bereich von 700°C bis 1100°C oder im Bereich von 700°C bis 950°C gegenüber Glas inerten Keramik, wie beispielsweise einem Carbid oder Nitrid, hergestellt oder mit einem solchen hochtemperaturbeständigen Material überzogen, insbesondere beschichtet. Besonders bevorzugt ist hierbei, insbesondere aus Kostengründen, die Verwendung von hochtemperaturbeständigem Edelstahl; allerdings ist auch die Verwendung der weiteren genannten Metalle möglich, wobei die Auswahl eines jeweiligen Metalls entsprechend den jeweiligen Erfordernissen, die sich an der Art des zu bearbeitenden Glas-Vorformlings und dessen gewünschten Verwendungszwecks orientieren, getroffen werden kann.

Gemäß einer weiteren vorteilhaften Ausführungsform der Erfindung weisen die Stützelemente wenigstens einen Hohlraum und/oder wenigstens einen Kanal und/oder eine Leitung auf, wobei der Hohlraum und/oder der Kanal und/oder die Leitung mit einem Fluid, insbesondere mit einem gasförmigen Fluid, wie beispielsweise Luft, durchströmbar ist/sind. Gemäß einer bevorzugten Ausführungsform der Erfindung ist ein stabförmiges Stützelement beispielsweise hohl ausgebildet, wobei in dem Hohlraum des stabförmigen Stützelements eine Fluidleitung angeordnet ist, durch welche ein Kühlfluid strömen kann. Im Falle einer umgekehrt-U-förmigen Ausbildung eines Stützelements kann das Stützelement selbst als Rohr ausgebildet sein, wobei das Kühlfluid in diesem Fall durch das Rohr selbst strömt. Aufgrund der Tatsache, dass in letzterem Fall keine separate Fluidleitung in dem Rohr verlegt werden muss, kann ein umgekehrt-U-förmiges Stützelement somit deutlich dünner als ein stabförmiges Stützelement ausgebildet sein, was in erfindungsgemäß äußerst vorteilhafter Weise wiederum dazu beiträgt, im Falle einer Erwärmung des Glas-Gobs eine auf den Glas-Vorformling wirkende Abschattung gegenüber dem Stand der Technik deutlich zu reduzieren.

Aufgrund der erfindungsgemäßen Vorsehung eines Hohlraums, eines Kanals oder einer Leitung in einem jeweiligen Stützelement ist somit eine Kühlung oder Erwärmung/Heizung der jeweiligen Stützelemente möglich. Dies ist zum einen vorteilhaft, um die Stützelemente vor einer Überhitzung zu schützen, kann jedoch je nach Material und Art des Stützelements auch zur Erwärmung und damit auch thermischen Homogenisierung der Umgebung der Stützelemente und der Kontaktfläche mit dem Glas-Vorformling verwendet werden. Insofern ist die Kühlung regelbar und kann so eingestellt werden, dass für jedes Stützelement eine jeweils gewünschte Temperatur erzielbar ist. Eine Temperaturregelung der Stützelemente kann hierbei beispielsweise über eine jeweilige Strömungsgeschwindigkeit des Kühlfluids, beispielsweise Luft, realisiert sein. Je nach Bedarf kann die oberste Kontaktfläche eines Stützelements mit dem Glas-Vorformling aus einem besonders wärmeresistenten Material bestehen, so dass erfindungsgemäß, je nach Anwendungsfall, darauf verzichtet werden kann, diese oberste Kontaktfläche des Stützelements mit dem Glas-Vorformling zu kühlen, diese oberste Kontaktfläche somit mithin nicht zwingend hohl ausgebildet sein muss, jedoch sein kann.

Des Weiteren weist die erfindungsgemäße Vorrichtung einen Reflektor, vorzugsweise einen IR-Strahlungsreflektor, auf dessen Reflexionsfläche in Richtung der Tragflächen ausgerichtet ist. Auf diese Weise kann auf den Glas-Vorformling im Bereich der Tragflächen eine aufgrund der Infrarot-Strahlungsreflexion leicht erhöhte Temperatureinwirkung erfolgen, die einer etwaigen Temperaturabführung durch das Stützelement entgegenwirkt. Die Reflexionsfläche ist hierbei erfindungsgemäß zwischen einem Grundkörper, an welchem die Stützelemente direkt oder mittelbar für befestigt sind und den jeweiligen Tragflächen angeordnet und so ausgerichtet, dass die Wärmestrahlung in Richtung der Abschattung durch die Tragflächen erfolgt, um hier zu einem Temperaturausgleich, relativ zu der übrigen erwärmten, respektive bestrahlten Gob-Oberfläche, beizutragen.

Des Weiteren kann die erfindungsgemäße Vorrichtung zumindest eine Induktions- und/oder IR-Heizung aufweisen, die vorzugsweise zwischen dem Grundkörper und den Tragflächen angeordnet und so ausgerichtet ist, dass deren Heizabstrahlrichtung in Richtung der Tragflächen weist. Auch auf diese Weise kann in erfindungsgemäß vorteilhafter Weise eine Homogenisierung der Gob-Temperatur herbeigeführt werden.

Da ein Glas-Vorformling in der Regel von unten in einen Infrarot-Heizofen eingeführt wird, kann auf diese Weise gleichzeitig eine Bestrahlung und damit Beheizung des Gobs von unten erfolgen. In ähnlicher, respektive ähnlich unterstützender Weise wirkt auch ein IR-Strahlungsreflektor, wenn dieser IR-Strahlungsreflektor entsprechend einem Infrarot-Heizofen so angeordnet ist, dass Wärmestrahlung in die untere Öffnung des Infrarot-Heizofens hinein abgestrahlt wird. Hierbei kann ein Infrarot-Strahlungsreflektor gemeinsam mit einem Infrarot-Heizofen eingesetzt werden. Alternativ ist es erfindungsgemäß auch möglich für die erfindungsgemäße Vorrichtung lediglich einen Infrarot-Strahlungsreflektor oder nur einen Infrarot-Heizofen vorzusehen. In diesem Zusammenhang sei ferner darauf hingewiesen, dass anstelle eines Infrarot-Heizofens auch ein Induktionsofen oder eine andere geeignete Heizvorrichtung verwendet werden kann.

Gemäß einer weiteren weisen die Stützelemente zumindest zwischen dem Grundkörper und dem Reflektor, respektive insbesondere zwischen einem oberhalb des Grundkörpers angeordneten Lanzenoberteil und dem Reflektor, wenigstens eine Vorrichtung zur Stabilisierung der Stützelemente auf. Die Vorrichtung zur Stabilisierung der Stützelemente kann beispielsweise in Form von Verstrebungen zwischen den Stützelementen und/oder einer oder mehrerer Lochplatte(n), durch welche sich die Stützelemente hindurch erstrecken, oder in Form eines Lochblocks oder gegebenenfalls mehrere Lochblöcke, durch welche sich die Stützelemente hindurch erstrecken, aufweisen.

Die Stützelemente sind an dem Lanzenoberteil angebracht, das seinerseits, beispielsweise mit einem Klemmring, an einem Lanzenunterteil lösbar befestigt ist, das wiederum dem Grundkörper zugeordnet und an dem Grundkörper so angeordnet, dass das Lanzenoberteil auf das Lanzenunterteil aufsetzbar und zentrierbar ist.

Die Vorrichtung zur Stabilisierung der Stützelemente dient primär dazu die Stützelemente hinsichtlich ihrer Position relativ zueinander zu fixieren, so dass vermieden wird, dass sich die Stützelemente verziehen oder verbiegen, wenn sie sich im Zuge eines Erwärmens des Gobs ebenfalls erwärmen.

Zu diesem Zweck werden die Stützelemente mittels der Vorrichtung zu ihrer Stabilisierung so miteinander verstrebt, verbunden, verstärkt oder zwangsgeführt, dass die Stützelemente ihre ursprünglich gewünschte Position, Form und Stellung aufrechterhalten. Dies wird beispielsweise dadurch erreicht, dass die Stützelemente entweder miteinander, beispielsweise mit Stäben, verstrebt und auf diese Weise stabilisiert werden. Eine weitere Möglichkeit die Stützelemente zu stabilisieren besteht ferner darin die Stützelemente durch ein oder mehrere Lochblech(e) zu führen, wobei die Stützelemente hierbei vorzugsweise mit dem einen oder den mehreren Lochblech(en) fest verbunden, insbesondere verschweißt, werden, so dass eine Relativbewegung zwischen den Stützelementen unterbunden ist und sich die Stützelemente quasi gegenseitig halten, respektive stützen, und sich hierdurch gegenseitig stabilisieren. Sofern mehrere Lochbleche verwendet werden, so können diese zueinander beanstandet zwischen dem Lanzenoberteil und dem Reflektor angeordnet sein. Eine weitere Möglichkeit zur Stabilisierung der Stützelemente besteht ferner darin quasi dicke Lochbleche oder alternativ einen, insbesondere massiven, Block zu verwenden, durch welche sich die Stützelemente hindurch erstrecken. Auch in diesem Fall können die einzelnen Stützelemente mit dem Block fest verbunden, insbesondere verschweißt sein. In diesem Zusammenhang sei ferner darauf hingewiesen, dass sich die Gewindebolzen entweder durch den Block und/oder das wenigstens eine Lochblech hindurch erstrecken können. Alternativ können der Block und das wenigstens eine Lochblech auch so, beispielsweise sternförmig, ausgebildet sein, dass zwar die Stützelemente stabilisiert werden, die Gewindebolzen sich jedoch außerhalb des Blocks und des wenigstens einen Lochblechs bewegen. Des Weiteren sei in diesem Zusammenhang darauf hingewiesen, dass auch mehrere Blöcke verwendet werden können, die entweder vertikal übereinander angeordnet oder beispielsweise auch unterschiedlichen Stützelementen zugeordnet sind. So ist es erfindungsgemäß beispielsweise denkbar, dass einem jeweiligen Stützelemente jeweils ein Block zugeordnet ist, der seinerseits verhindert, dass sich ein Stützelement zur Seite verbinden oder verbiegen kann. In diesem Fall wird jeweils ein Stützelemente für sich stabilisiert, ohne dass die einzelnen Stützelemente quasi miteinander verbunden sind.

Gemäß einer weiteren vorteilhaften Ausführungsform der Erfindung sind die Stützelemente Teil einer Vertikalpresse, wobei sich die Stützelemente vorzugsweise durch in einem unteren Teil der Vertikalpresse vorgesehene Öffnungen und/oder Führungen erstrecken und während eines Pressvorgangs, insbesondere Blankpressvorgangs, in den unteren Teil der Vertikalpresse zurückziehbar sind. Auf diese Weise ist es erfindungsgemäß möglich, jeweilige auf den, in der Regel zumindest zwei, Stützelementen aufliegende, respektive von den Stützelementen unterstützte, Glas-Vorformlinge bzw. (Glas-)Gobs entlang einer Vertikalachse der Presse, in einen Ofen hinein und aus dem Ofen heraus zu verfahren. Nach einer Erwärmung des/der Glas-Vorformling(e), respektive des/der (Glas-)Gob(s), in dem Ofen wird/werden der/die Vorformling(e) entlang der Vertikalachse der Presse wieder aus dem Ofen heraus befördert, nämlich entweder nach unten oder nach oben, und anschließend gepresst, insbesondere blank gepresst.

Alternativ zu einer Bewegung des/der Vorformling(e) in den Ofen hinein, respektive aus dem Ofen heraus, ist es erfindungsgemäß ebenso möglich den/die Vorformling(e) entlang der Vertikalachse der Presse ortsfest zu positionieren und den, vorzugsweise röhrenförmigen, Ofen entlang der Vertikalachse der Presse so zu verfahren, dass dieser den/die Vorformling(e) so umgibt, dass der/die Vorformling(e) erwärmt werden können.

Auch eine im Wesentlichen simultane Bewegung des/der Vorformling(e) und des Ofens is erfindungsgemäß möglich, wobei durch eine solche simultane, zueinander gegenläufige, Bewegung von Vorformling und Ofen eine besonders hohe Taktrate erzielt werden kann.

Gemäß einer weiteren Ausführungsform der Erfindung kann der Ofen auch klappbar oder teilbar, insbesondere um eine Vertikalachse klappbar oder bezüglich einer Vertikalebene teilbar, ausgebildet sein, so dass ein/mehrere Vorformling(e) zum Erwärmen von dem Ofen umschlossen und nach dem Erwärmen zum Pressen von dem Ofen wieder freigegeben werden können. Der Begriff "vertikal" bezieht sich hierbei immer auf die Vertikalachse der Presse.

Gemäß einer weiteren Ausführungsform der Erfindung ist es ferner möglich die Glas-Vorformlinge in den Ofen zu verfahren und in selbigem Ofen zu pressen, insbesondere blank zu pressen, ohne dass es notwendig ist die erwärmten Glas-Vorformlinge zunächst wieder aus dem Ofen zu entnehmen und diese Glas-Vorformlinge erst anschließend einer Presse zuzuführen. Gemäß dieser Variante kann die Ofentemperatur so gewählt werden, dass bei einer erhöhten Ofentemperatur zunächst ein Erwärmen der Glas-Vorformlinge erfolgt und anschließend bei einer niedrigeren Ofentemperatur der Pressvorgang stattfindet.

An dieser Stelle sei insbesondere erwähnt, dass auf Wunsch eine solche oder gegebenenfalls andere gewünschte Temperaturregelung des Ofens erfindungsgemäß auch für alle weiteren, insbesondere die oben genannten Ausführungsformen, möglich ist.

Gemäß einer Ausführungsform der Erfindung werden die vorgeformten Glas-Vorformlinge bzw. Gobs somit zunächst auf den Tragflächen der Stützelemente, die sich durch ein unteres Presselement einer Vertikalpresse erstrecken, platziert und anschließend von unten in einen, in der Regel zylinderförmigen Ofen verfahren. In dem Ofen werden die Gobs erfindungsgemäß zumindest oberflächlich soweit erwärmt, dass ein anschließendes Pressen, insbesondere Blankpressen der erwärmten Glas-Vorformlinge bzw. Gobs möglich ist. Der Pressvorgang wird erfindungsgemäß durch eingeleitet, dass die Tragflächen der Stützelemente einer Pressfläche des unteren Presselements angenähert werden, bis die Tragflächen der Stützelemente entweder bündig mit der Pressfläche des unteren Presselements abschließen oder, je nach Wunsch, etwas aus der Ebene der Pressfläche herausragen oder etwas unter die Ebene der Pressfläche in das untere Presselement zurückgezogen sind. Die letzteren beiden Möglichkeiten können beispielsweise für eine Profilierung der Unterseite des Gobs, gegebenenfalls auch zur Fixierung des Gobs, insbesondere während des Pressvorgangs, genutzt werden.

Die Annäherung der Tragflächen der Stützelemente an die Pressfläche des unteren Presselements kann dadurch erfolgen, dass die aus dem unteren Presselement der Vertikalpresse nach oben herausragenden Stützelemente in das untere Presselement zurückgezogen werden. Alternativ ist es erfindungsgemäß auch möglich, dass sich bei einem stationären unteren Presselement nicht die aus diesem herausragenden Stützelemente bewegen, sondern umgekehrt die Stützelemente in einer im Wesentlichen stationären Position verbleiben, während das untere Presselement der Vertikalpresse entlang der Stützelemente soweit angehoben wird, dass ein Pressen entsprechend obiger Ausführungen möglich wird. In diesem Zusammenhang sei ferner darauf hingewiesen, dass die Relativbewegung der Tragflächen der Stützelemente gegenüber der Pressfläche des unteren Presselements auch dadurch erfolgen kann, dass sich einerseits die Stützelemente nach unten in das untere Presselement zurückziehen, während das untere Presselement gleichzeitig nach oben in Richtung der Tragflächen der Stützelemente verfahren wird, bis ein gewünschter Endpunkt erreicht ist.

Nach vollendetem Pressvorgang wird der fertig gepresste Glasgegenstand aus der Pressform entnommen, wobei die Stützelemente zur Entformung des Glasgegenstands verwendet werden können, indem diese den fertigen Glasgegenstand nach einem Erkalten, bzw. dann, wenn der Glasgegenstand in Bezug auf ein mechanisches Angreifen des Glasgegenstands formstabil ist, durch ein nach oben Verfahren aus der Pressform drücken.

Das anhand der erfindungsgemäßen Vorrichtung ermöglichte Pressen der Glas-Vorformlinge in der Vertikalachse der Presse, beispielsweise unmittelbar in, unter oder über dem Ofen, in welchen die Glas-Vorformlinge oberflächlich erwärmt werden, bietet zahlreiche Vorteile, die zum einen darin bestehen, dass eine unerwünschte Abkühlung der Glas-Vorformlinge mittels der erfindungsgemäßen Vorrichtung vermieden werden kann. Zum anderen besteht somit erfindungsgemäß auch nicht die Gefahr, dass die Glas-Vorformlinge während einer lateralen Verbringung der Vorformlinge vom Ofen zu einer seitlich des Ofens angeordneten Presse verrutschen oder beispielsweise herunterfallen. Darüber hinaus kann aufgrund der unmittelbaren Pressung des/der Glas-Vorformlings/Glas-Vorformlinge unmittelbar im, unter oder über dem Ofen auch eine höhere Taktfrequenz bei der Fertigung der gewünschten Glasgegenstände gefahren werden, da ein unnötiger Zeitaufwand, der aus der bisher notwendigen Verbringung der erwärmten Glas-Vorformlinge vom Ofen zu einer seitlich vom Ofen entfernten Presse resultiert, erfindungsgemäß vermieden werden kann.

Im Hinblick auf die oben beschriebene Erfindung sei ferner darauf hingewiesen, dass der Begriff Glas-Vorformlinge Glas-Vorformlinge aller Art, jedoch insbesondere Gobs mit einer bevorzugten Dicke im Bereich von > 5 mm, bevorzugt > 8 Millimeter und besonders bevorzugt > 10 Millimeter sowie ferner Glas-Wafer umfasst, wobei Letztere, gegebenenfalls profilierte, Flachglasgegenstände Dicken im Bereich von < 1 mm sowie, je nach Anwendung auch dicker, haben.

Weitere Ausführungsformen der Erfindung ergeben sich aus den Unteransprüchen.

Nachfolgend wird die Erfindung anhand eines Ausführungsbeispiels beschrieben, das anhand der Abbildungen näher erläutert wird. Hierbei zeigen:
- Fig. 1: eine schematische Darstellung einer Ausführungsform der erfindungsgemäßen Vorrichtung in perspektivischer Seitenansicht;
- Fig. 2: eine schematische Darstellung der Ausführungsform gemäß Fig. 1 in Aufsicht;
- Fig. 3: eine schematische seitliche Schnittansicht der Ausführungsform gemäß Fig. 2 entlang der Schnittlinie A-A;
- Fig. 4: eine schematische seitliche Schnittansicht der Ausführungsform gemäß Fig. 2 entlang der Schnittlinie B-B; und
- Fig. 5: eine schematische seitliche Schnittansicht der Ausführungsform gemäß Fig. 2 gemäß der Schnittlinie C-C.

In der nachfolgenden Beschreibung werden für gleiche und gleichwirkende Teile dieselben Bezugsziffern verwendet.

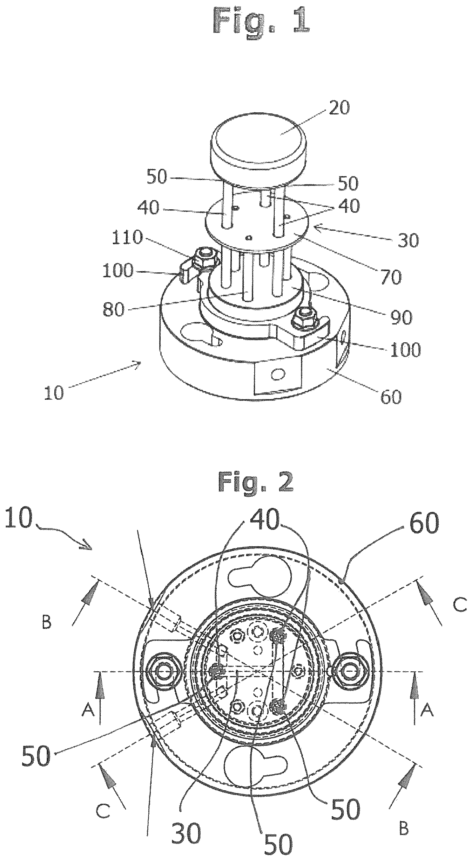

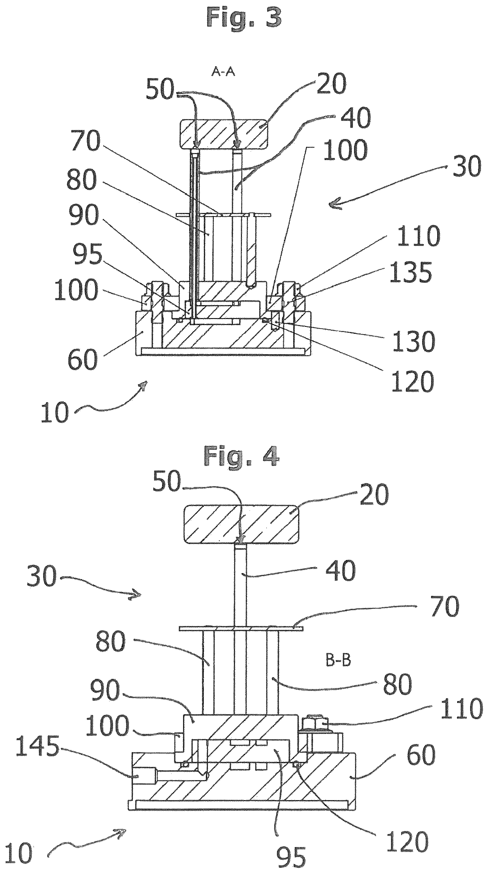

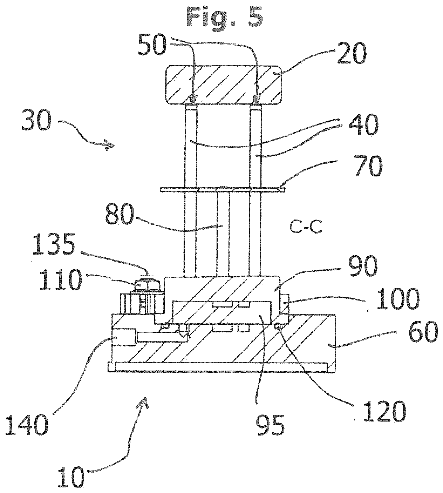

Fig. 1 zeigt eine schematische Darstellung einer Ausführungsform der erfindungsgemäßen Vorrichtung 10 zum unterstützenden Halten eines Glas-Vorformlings 20 in perspektivischer Seitenansicht von schräg oben. Die Vorrichtung 10 umfasst eine Tragvorrichtung 30, die von drei Stützelementen 40 gebildet wird. Die einzelnen Stützelemente 40 weisen jeweils eine Tragfläche 50 auf, auf welchen der Glas-Vorformling bzw. Gob 20 gleichmäßig aufliegt. Die Stützelemente 40 sind an einem Lanzenoberteil 90 angebracht, das mit einem Klemmring 100 an einem Lanzenunterteil 95 lösbar befestigt ist. Für die Befestigung des Lanzenoberteils 90 an dem Lanzenunterteil 95, respektive zur Sicherung des Klemmrings 100, sind jeweils Muttern 110 vorgesehen, mit welchen das Lanzenoberteil 90 in der Art eines Schnellverschlusses an dem Lanzenunterteil 95 befestigt werden kann. Hierbei dient ein O-Ring 120 als Auflager für das Lanzenoberteil 90. Das Lanzenunterteil 95 ist einem Grundkörper 60 zugeordnet und an dem Grundkörper 60 so angeordnet, dass das Lanzenoberteil 90 auf das Lanzenunterteil 95 aufsetzbar und mittels des Lanzenunterteils 95 zentrierbar ist. Des Weiteren weist der Grundkörper 60 zumindest eine erste Schraube 130 und eine zweite Schraube 135 auf, die als Befestigungsmittel für das Lanzenoberteil 90, respektive den Klemmring 100, dienen und den Befestigungs-Gegenpart zu den Muttern 110 darstellen. Ferner weist die erfindungsgemäße Vorrichtung 10 einen Reflektor 70 auf, durch welchen sich die Stützelemente 40 hindurcherstrecken und der so angeordnet ist, dass er sich zwischen dem Lanzenoberteil 90 und dem Glas-Vorformling 20 befindet. Der Reflektor 70 ist seinerseits mittels Gewindebolzen 80 in der Höhe verstellbar und kann somit nach Wunsch näher an den Glas-Vorformling 20 herangefahren oder von diesem entfernt werden. Insbesondere der detaillierte Aufbau der erfindungsgemäßen Vorrichtung ist besonders gut aus Fig. 2 bis Fig. 5 zu erkennen, die die erfindungsgemäße Vorrichtung jeweils in Aufsicht bzw. in drei unterschiedlichen Schnittansichten zeigen. So ist ferner aus Fig. 4 und Fig. 5 gut zu erkennen, dass der Grundkörper 60 einen Kühlluft-Vorlauf 140 sowie einen Kühlluft-Rücklauf 145 aufweist, mit welchem die erfindungsgemäße Vorrichtung und insbesondere die Stützelemente 40 nach Wunsch temperiert und insbesondere gekühlt werden können, wobei zur Kühlung ein Fluid, wie beispielsweise Luft, verwendbar ist. Das Fluid kann hierbei vorab auf eine gewünschte Temperatur temperiert werden.

An dieser Stelle sei darauf hingewiesen, dass alle oben beschriebenen Teile für sich alleine gesehen und in jeder Kombination, insbesondere die in den Zeichnungen dargestellten Details, als erfindungswesentlich beansprucht werden. Abänderungen hiervon sind dem Fachmann geläufig.

### Bezugszeichenliste

- 10: Vorrichtung
- 20: Vorformling
- 30: Tragvorrichtung
- 40: Stützelement
- 50: Tragfläche
- 60: Grundkörper
- 70: Reflektor
- 80: Gewindebolzen
- 90: Lanzenoberteil
- 95: Lanzenunterteil
- 100: Klemmring
- 110: Mutter
- 120: O-Ring
- 130: erste Schraube
- 135: zweite Schraube
- 140: Kühlluft-Vorlauf
- 145: Kühlluft-Rücklauf

## Patentansprüche

1. Vorrichtung (10) zum unterstützenden Halten sowie gegebenenfalls Verfahren eines Glas-Vorformlings (20), wie beispielsweise eines Gobs,
wobei die Vorrichtung (10) eine Tragvorrichtung (30)
- zumindest ein, im Betrieb im Wesentlichen vertikal ausgerichtetes, stabförmiges Stützelement (40) aufweist, wobei das stabförmige Stützelement (40) an seinem oberen Ende in zumindest einer punktförmigen nach oben gerichteten Tragfläche (50) mündet;
und/oder
- zumindest ein, im Betrieb im Wesentlichen vertikal ausgerichtetes und im Wesentlichen umgekehrt-U-förmiges Stützelement mit einer nach oben gerichteten und die sich im Wesentlichen vertikal erstreckenden Vertikalabschnitte des Stützelements verbindenden Tragfläche aufweist,
**dadurch gekennzeichnet, dass**
die Vorrichtung (10) zumindest einen Reflektor (70), vorzugsweise einen IR-Strahlungsreflektor, aufweist, der vorzugsweise zwischen einem Grundkörper (60) und den Tragflächen (50) angeordnet und so ausgerichtet ist, dass dessen Reflexionsfläche in Richtung der Tragflächen (50) weist.

2. Vorrichtung nach Anspruch 1,
**dadurch gekennzeichnet, dass**
das zumindest eine stabförmige Stützelement (40) an seinem oberen Ende zumindest zwei, insbesondere gabelförmig verlaufendende, Fortsätze aufweist, die jeweils in einer punktförmigen nach oben gerichteten Tragfläche (50) münden.

3. Vorrichtung nach Anspruch 2,
**dadurch gekennzeichnet, dass**
das zumindest eine stabförmige Stützelement (40) im Wesentlichen Y-förmig oder mit einem umgekehrten, d.h nach oben weisenden, zumindest Dreibein, ausgebildet ist, wobei, insbesondere jeder der Fortsätze, jeweils in einer punktförmigen nach oben gerichteten Tragfläche (50) mündet.

4. Vorrichtung nach einem der vorhergehenden Ansprüche,
**dadurch gekennzeichnet, dass**
die Vorrichtung (10) zumindest zwei stabförmige Stützelemente (40) gemäß einem der Ansprüche 2 oder 3 und/oder wenigstens ein, bevorzugt zwei im Wesentlichen umgekehrt-U-förmige Stützelemente aufweist, wobei die jeweiligen Tragflächen (50) der Stützelemente (40) vorzugsweise in einer gemeinsamen Ebene angeordnet oder angeordenbar sind.

5. Vorrichtung nach einem der vorhergehenden Ansprüche,
**dadurch gekennzeichnet, dass**
die Tragflächen (50) jeweils an Ecken oder Seiten eines, insbesondere gleichseitigen, Dreiecks oder, im Fall von mehr als drei Stützelementen (40) eines, insbesondere gleichseitigen, Polygons angeordnet sind.

6. Vorrichtung nach einem der vorhergehenden Ansprüche,
**dadurch gekennzeichnet, dass**
die Tragflächen (50) der stabförmigen Stützelemente (40) in Aufsicht einen symmetrischen, insbesondere im Wesentlichen runden oder ringförmigen, Querschnitt haben.

7. Vorrichtung nach einem der vorhergehenden Ansprüche,
**dadurch gekennzeichnet, dass**
die Tragflächen (50) im Wesentlichen flach oder zumindest abschnittsweise, insbesondere nach oben weisend, konvex gewölbt ausgebildet sind.

8. Vorrichtung nach einem der vorhergehenden Ansprüche,
**dadurch gekennzeichnet, dass**
die jeweiligen punktförmigen Tragflächen (50) jeweils eine Fläche im Bereich von 1 mm² bis 100 mm², bevorzugt 12 mm² bis 60 mm² und besonders bevorzugt 20 mm² bis 40 mm², haben.

9. Vorrichtung nach einem der vorhergehenden Ansprüche,
**dadurch gekennzeichnet, dass**
die Tragflächen (50) aus einem hochtemperaturbeständigen Material, wie beispielsweise einem hochschmelzenden Metall, beispielsweise Stahl, Gold, Kupfer, Ruthenium, Osmium, Zirconium, Hafnium, Niob, Tantal, Chrom, Molybdän oder Wolfram oder einer hochschmelzenden Legierung oder einer bei Temperaturen im Bereich von 700°C bis 1500°C gegenüber Glas inerten Keramik, wie beispielsweise einem Carbid oder Nitrid, hergestellt oder mit einem solchen hochtemperaturbeständigen Material beschichtet sind.

10. Vorrichtung nach einem der vorhergehenden Ansprüche,
**dadurch gekennzeichnet, dass**
die Stützelemente (40) sowie gegebenenfalls auch die Tragflächen (50) wenigstens einen, insbesondere gemeinsamen, Hohlraum und/oder wenigstens einen, insbesondere gemeinsamen, Kanal und/oder eine Leitung aufweisen, wobei der jeweilige Hohlraum und/oder der jeweilige Kanal und/oder Leitung mit einem Fluid, insbesondere mit einem gasförmigen Fluid, wie beispielsweise Luft, durchströmbar ist/sind.

11. Vorrichtung nach einem der vorhergehenden Ansprüche,
**dadurch gekennzeichnet, dass**
die Stützelemente (40) einzeln oder gemeinsam mittels eines Schnellwechselverschlusses an dem Grundkörper (60) lösbar befestigbar sind.

12. Vorrichtung nach einem der vorhergehenden Ansprüche,
**dadurch gekennzeichnet, dass**
die Vorrichtung (10) zumindest eine Induktions- und/oder IR-Heizung, aufweist, die vorzugsweise zwischen dem Grundkörper (60) und den Tragflächen (50) angeordnet und so ausgerichtet ist, dass deren Heizabstrahlrichtung in Richtung der Tragflächen (50) weist.

13. Vorrichtung nach einem der vorhergehenden Ansprüche,
**dadurch gekennzeichnet, dass**
die Stützelemente (40) jeweils gemeinsam oder individuell höhenverstellbar sind und/oder zumindest zwischen dem Grundkörper (60) und dem Reflektor (70), insbesondere zwischen einem oberhalb des Grundkörpers (60) angeordneten Lanzenoberteil (90) und dem Reflektor (70), wenigstens eine Vorrichtung zur Stabilisierung der Stützelemente (40) in Form von Verstrebungen zwischen den Stützelementen (40) und/oder einer oder mehrerer Lochplatte(n), durch welche sich die Stützelemente (40) hindurch erstrecken, oder eines Lochblocks, durch welche sich die Stützelemente (40) hindurch erstrecken, aufweisen.

14. Vorrichtung nach einem der vorhergehenden Ansprüche,
**dadurch gekennzeichnet, dass**
die Stützelemente (40) Teil einer Vertikalpresse sind, wobei sich die Stützelemente (40) vorzugsweise durch in einem unteren Teil der Vertikalpresse vorgesehene Öffnungen und/oder Führungen erstrecken und während eines Pressvorgangs, insbesondere Blankpressvorgangs, in den unteren Teil der Vertikalpresse zurückziehbar sind.

## Claims

1. Device (10) for supportingly holding and optionally moving a glass preform (20), such as for example a gob, wherein the device (10) comprises a carrier device (30),
- at least one, in operation substantially vertically oriented, rod-shaped support element (40), wherein the rod-shaped support element (40) terminates at its upper end in at least one point-shaped upwardly directed support surface (50);
and/or
- at least one, in operation substantially vertically aligned and substantially inverted U-shaped support element with an upwardly directed support surface connecting the substantially vertically extending vertical portions of the support element,
**characterized in that**
the device (10) has at least one reflector (70), preferably an IR radiation reflector, which is preferably arranged between a base body (60) and the support surfaces (50) and is aligned in such a way that its reflecting surface faces in the direction of the support surfaces (50).

2. Device according to claim 1,
**characterized in that**
the at least one rod-shaped support element (40) has at its upper end at least two projections, in particular extending in the shape of a fork, which each terminate in a point-shaped support surface (50) directed upwards.

3. Device according to claim 2,
**characterized in that**
the at least one rod-shaped support element (40) is formed essentially Y-shaped or with an inverted, i.e. upwardly facing, at least tripod, wherein, in particular, each of the projections opens in each case in a point-shaped upwardly directed support surface (50).

4. Device according to one of the preceding claims,
**characterized in that**
the device (10) comprises at least two rod-shaped support elements (40) according to one of claims 2 or 3 and/or at least one, preferably two, substantially inverted U-shaped support elements, wherein the respective support surfaces (50) of the support elements (40) are preferably arranged or arrangeable in a common plane.

5. Device according to one of the preceding claims,
**characterized in that**
the support surfaces (50) are each arranged at corners or sides of a, in particular equilateral, triangle or, in the case of more than three support elements (40) of a, in particular equilateral, polygon.

6. Device according to one of the preceding claims,
**characterized in that**
the support surfaces (50) of the rod-shaped support elements (40) have, in plan view, a symmetrical, in particular substantially round or annular, cross-section.

7. Device according to one of the preceding claims,
**characterized in that**
the support surfaces (50) are designed to be essentially flat or convexly curved at least in sections, in particular facing upwards.

8. Device according to one of the preceding claims,
**characterized in that**
the respective point-shaped support surfaces (50) each have an area in the range from 1 mm² to 100 mm², preferably 12 mm² to 60 mm² and particularly preferably 20 mm² to 40 mm².

9. Device according to one of the preceding claims,
**characterized in that**
the support surfaces (50) are made of a high-temperature-resistant material, such as, for example, a refractory metal, e.g. steel, gold, copper, ruthenium, osmium, zirconium, hafnium, niobium, tantalum, chromium, molybdenum or tungsten or a refractory alloy or a ceramic, such as, for example, a carbide or nitride, which is inert to glass at temperatures in the range from 700°C to 1500°C, or are coated with such a high-temperature-resistant material.

10. Device according to one of the preceding claims,
**characterized in that**
the support elements (40) as well as optionally also the support surfaces (50) comprise at least one, in particular common, cavity and/or at least one, in particular common, channel and/or conduit, wherein a fluid, in particular a gaseous fluid, such as for example air, can flow through the respective cavity and/or the respective channel and/or conduit.

11. Device according to one of the preceding claims,
**characterized in that**
the support elements (40) can be detachably fastened to the base body (60) individually or jointly by means of a quick-change fastener.

12. Device according to one of the preceding claims,
**characterized in that**
the device (10) has at least one induction and/or IR heater, which is preferably arranged between the base body (60) and the support surfaces (50) and is aligned in such a way that its heating radiation direction faces in the direction of the support surfaces (50).

13. Device according to one of the preceding claims,
**characterized in that**
the support elements (40) are each height-adjustable jointly or individually and/or comprise, at least between the base body (60) and the reflector (70), in particular between a lance upper part (90) arranged above the base body (60) and the reflector (70), at least one device for stabilizing the support elements (40) in the form of struts between the support elements (40) and/or one or more perforated plate(s) through which the support elements (40) extend, or a perforated block through which the support elements (40) extend.

14. Device according to one of the preceding claims,
**characterized in that**
the support elements (40) are part of a vertical press, wherein the support elements (40) preferably extend through openings and/or guides provided in a lower part of the vertical press and are retractable into the lower part of the vertical press during a pressing operation, in particular blank pressing operation.

## Revendications

1. Dispositif (10) pour la retenue par support et, le cas échéant, le déplacement d'une préforme en verre (20), telle qu'une paraison,
dans lequel le dispositif (10) comprend un dispositif de support (30)
- présentant au moins un élément de support (40) en forme de barre, orienté essentiellement verticalement en fonctionnement, l'élément de support (40) en forme de barre débouchant à son extrémité supérieure dans au moins une surface porteuse (50) ponctuelle dirigée vers le haut ;
et/ou
- présentant au moins un élément de support orienté essentiellement verticalement en fonctionnement et essentiellement en forme de U inversé, avec une surface porteuse dirigée vers le haut et reliant les sections verticales de l'élément de support s'étendant essentiellement verticalement
**caractérisé en ce que**
le dispositif (10) présente au moins un réflecteur (70), de préférence un réflecteur de rayonnement IR, qui est disposé de préférence entre un corps de base (60) et les surfaces porteuses (50) et orienté de telle sorte que sa surface de réflexion est dirigée vers les surfaces porteuses (50).

2. Dispositif selon la revendication 1,
**caractérisé en ce que**
l'au moins un élément de support (40) en forme de barre présente à son extrémité supérieure au moins deux prolongements, en particulier en forme de fourche, qui débouchent chacun dans une surface porteuse (50) ponctuelle dirigée vers le haut.

3. Dispositif selon la revendication 2,
**caractérisé en ce que**
l'au moins un élément de support (40) en forme de barre est réalisé essentiellement en forme de Y ou avec au moins un tripode inversé, c'est-à-dire dirigé vers le haut, dans lequel, en particulier chacun des prolongements, débouche respectivement dans une surface porteuse (50) ponctuelle dirigée vers le haut.

4. Dispositif selon l'une des revendications précédentes,
**caractérisé en ce que**
le dispositif (10) comprend au moins deux éléments de support (40) en forme de barre selon l'une des revendications 2 ou 3 et/ou au moins un, de préférence deux éléments de support essentiellement en forme de U inversé, les surfaces porteuses respectives (50) des éléments de support (40) étant de préférence disposées ou pouvant être disposées dans un plan commun.

5. Dispositif selon l'une des revendications précédentes,
**caractérisé en ce que**
les surfaces porteuses (50) sont disposées respectivement aux angles ou aux côtés d'un triangle, en particulier équilatéral, ou, dans le cas de plus de trois éléments de support (40), d'un polygone, en particulier équilatéral.

6. Dispositif selon l'une des revendications précédentes,
**caractérisé en ce que**
les surfaces porteuses (50) des éléments de support (40) en forme de barre ont, en vue de dessus, une section transversale symétrique, notamment essentiellement ronde ou annulaire.

7. Dispositif selon l'une des revendications précédentes,
**caractérisé en ce que**
les surfaces porteuses (50) sont essentiellement plates ou au moins partiellement bombées de manière convexe, notamment en étant dirigées vers le haut.

8. Dispositif selon l'une des revendications précédentes,
**caractérisé en ce que**
les surfaces porteuses respectives (50) ponctuelles ont chacune une surface dans la plage de 1 mm² à 100 mm², de préférence de 12 mm² à 60 mm² et plus préférentiellement de 20 mm² à 40 mm².

9. Dispositif selon l'une des revendications précédentes,
**caractérisé en ce que**
les surfaces porteuses (50) sont fabriquées à partir d'un matériau résistant aux températures élevées, tel qu'un métal réfractaire, par exemple l'acier, l'or, le cuivre, le ruthénium, l'osmium, le zirconium, le hafnium, le niobium, le tantale, le chrome, le molybdène ou le tungstène ou un alliage réfractaire ou une céramique inerte vis-à-vis du verre à des températures comprises entre 700 °C et 1 500 °C, telle qu'un carbure ou un nitrure, ou sont revêtues d'un tel matériau résistant aux températures élevées.

10. Dispositif selon l'une des revendications précédentes,
**caractérisé en ce que**
les éléments de support (40) ainsi que, le cas échéant, également les surfaces porteuses (50) présentent au moins une cavité, en particulier commune, et/ou au moins un canal et/ou une conduite, en particulier communs, la cavité respective et/ou le canal et/ou la conduite respectifs pouvant être traversés par un fluide, en particulier par un fluide gazeux, comme par exemple de l'air.

11. Dispositif selon l'une des revendications précédentes,
**caractérisé en ce que**
les éléments de support (40) peuvent être fixés de manière amovible, individuellement ou ensemble, à un corps de base (60) au moyen d'une fermeture à changement rapide.

12. Dispositif selon l'une des revendications précédentes,
**caractérisé en ce que**
le dispositif (10) présente au moins un chauffage par induction et/ou IR, qui est disposé de préférence entre le corps de base (60) et les surfaces porteuses (50) et est orienté de telle sorte que sa direction de rayonnement de chauffage est dirigée vers les surfaces porteuses (50).

13. Dispositif selon l'une des revendications précédentes,
**caractérisé en ce que**
les éléments de support (40) sont chacun réglables en hauteur, ensemble ou individuellement, et/ou présentent au moins entre le corps de base (60) et le réflecteur (70), notamment entre une partie supérieure de lance (90) disposée au-dessus du corps de base (60) et le réflecteur (70), au moins un dispositif de stabilisation des éléments de support (40) sous la forme d'entretoises entre les éléments de support (40) et/ou d'une ou plusieurs plaques perforées à travers lesquelles s'étendent les éléments de support (40) ou d'un bloc perforé à travers lequel s'étendent les éléments de support (40).

14. Dispositif selon l'une des revendications précédentes,
**caractérisé en ce que**
les éléments de support (40) font partie d'une presse verticale, les éléments de support (40) s'étendant de préférence à travers des ouvertures et/ou des guides prévus dans une partie inférieure de la presse verticale et pouvant être rétractés dans la partie inférieure de la presse verticale pendant une opération de pressage, en particulier une opération de pressage à blanc.
